# FASCICULE DE BREVET EUROPEEN

(11) **EP 0 701 956 B1**
(45) Date de publication et mention de la délivrance du brevet: **21.04.1999**
(21) Numéro de dépôt: 95402070.7
(22) Date de dépôt: 13.09.1995
(51) Int. Cl.: B65G 65/23, B65D 88/56

(54) **Dispositif de transfert de conteneurs**
Transfer-Vorrichtung für Behälter
Transfer device for containers

(30) Priorité: 14.09.1994 FR 9410960
(43) Date de publication de la demande: 20.03.1996
(73) Titulaire: VERI, F-92150 Suresnes (FR)
(72) Inventeur: Riat, Jean-Paul, F-92000 Nanterre (FR)
(74) Mandataire: Dronne, Guy

(56) Documents cités:
- DE-A- 2 700 079
- DE-C- 406 651
- FR-A- 1 493 633
- US-A- 3 089 725
- US-A- 4 496 275

## Description

La présente invention a pour objet un dispositif de transfert de conteneurs pour des conteneurs comportant à chacune de leurs extrémités un tourillon.

De façon plus précise, l'invention concerne un dispositif de transfert de conteneurs du type comportant à chacune des extrémités du conteneur un tourillon et autorisant le basculement du conteneur afin notamment de vider celui-ci.

Il existe de nombreuses situations dans lesquelles on est amené à déplacer des conteneurs à l'intérieur d'une installation de traitement du contenu de ces conteneurs. Lorsque le contenu de ces conteneurs présente un certain danger, il est très souhaitable que l'ensemble des manipulations effectuées sur ces conteneurs, notamment pour les décharger des matériaux qu'ils contiennent en vue du traitement de ces matériaux, soit réalisé entièrement automatiquement sans quelque intervention manuelle que ce soit.

Cette situation se présente en particulier dans des installations d'incinération de déchets toxiques et en particulier dans le cas d'installations d'incinération de déchets récupérés, par exemple dans des centres hospitaliers. Les produits ou matériaux à incinérer sont acheminés vers l'installation d'incinération dans des conteneurs qui sont montés à l'entrée de chaînes de transfert permettant de déplacer le conteneur à différents postes de traitement, un de ces postes consistant dans le vidage du conteneur dans le four d'incinération, un autre poste consistant dans une étape de nettoyage et de décontamination du conteneur. Pour ces deux opérations, il est bien sûr nécessaire de provoquer le basculement du conteneur aux emplacements correspondants de la chaîne de transfert.

On connaît déjà une telle installation d'incinération comportant une chaîne de transfert des conteneurs et aux emplacements voulus, c'est-à-dire à l'entrée des fours d'incinération et aux postes de lavage, des équipements de basculement des conteneurs. Cette solution est très efficace puisqu'elle évite toute manipulation par les préposés à l'installation mais elle présente l'inconvénient qu'en cas de non-fonctionnement d'un poste de basculement, c'est l'ensemble de la chaîne de traitement qui se trouve indisponible.

Le document DE-A-2 700 079 décrit un dispositif motorisé pour le basculement de conteneurs qui nécessite l'emploi de conteneurs spécifiques.

Un objet de la présente invention est de fournir un dispositif de transfert de conteneur du type mentionné ci-dessus qui permette le basculement des conteneurs par des moyens propres au dispositif de transfert.

Pour atteindre ce but, le dispositif de transfert de conteneurs pour des conteneurs comportant deux faces d'extrémité munies, chacune, d'un tourillon, lesdits tourillons définissant un axe de pivotement du conteneur et deux faces latérales s'étendant parallèlement audit axe de pivotement, ledit dispositif comprenant :
une balancelle comportant une traverse horizontale apte à coopérer avec des rails de guidage horizontaux et deux montants verticaux solidaires respectivement d'une des extrémités de ladite traverse,
deux ensembles d'accrochage, chaque ensemble d'accrochage étant solidaire d'un desdits montants et apte à coopérer avec un des tourillons d'un conteneur pour définir un axe horizontal de pivotement du conteneur par rapport à ladite balancelle, et
des moyens de basculement dudit conteneur comprenant un bras de basculement dont une première extrémité est montée rotative par rapport à l'un desdits montants autour dudit axe de pivotement, ledit bras étant perpendiculaire audit axe, un organe de basculement monté à la deuxième extrémité dudit bras et des moyens moteur montés sur ladite balancelle pour commander la rotation dudit bras autour dudit axe, ledit dispositif se caractérisant en ce que ledit organe de basculement s'étend parallèlement audit axe de pivotement, ledit organe de basculement étant apte à entrer en contact avec une des faces dudit conteneur sous l'effet de la rotation dudit bras, par quoi le mouvement de rotation dudit organe de basculement provoque le basculement contrôlé du conteneur autour dudit axe de pivotement pour amener ledit conteneur dans une position basculée.

On comprend que, grâce aux dispositions de l'invention, les moyens de basculement sont montés directement sur la balancelle du dispositif de transfert. Ainsi, même si un dispositif de basculement venait à être défaillant, c'est seulement une balancelle de l'ensemble de la chaîne de transfert qui serait inutilisable, les autres balancelles étant disponibles et permettant le basculement des conteneurs.

Selon un premier mode de réalisation, les moyens de basculement comprennent en outre un deuxième bras de basculement dont une première extrémité est montée rotative par rapport audit deuxième montant autour dudit axe de pivotement, ledit deuxième bras étant perpendiculaire audit axe, un deuxième organe de basculement monté à la deuxième extrémité dudit deuxième bras et s'étendant parallèlement audit axe de pivotement, ledit deuxième organe de basculement étant apte à entrer en contact avec ledit conteneur, des deuxièmes moyens moteurs montés sur ladite balancelle pour commander la rotation dudit deuxième bras autour dudit axe, et des moyens de synchronisation des premiers et deuxièmes moyens moteurs pour que lesdits premier et deuxième organes de basculement soient sensiblement alignés dans leur mouvement de rotation.

Selon un deuxième mode de mise en oeuvre, les moyens de basculement comprennent en outre un deuxième bras de basculement dont une première extrémité est montée rotative par rapport audit deuxième montant autour dudit axe de pivotement, ledit deuxième bras étant perpendiculaire audit axe, ledit organe de basculement comprenant une première extrémité qui est solidaire de la deuxième extrémité dudit premier bras de basculement et une deuxième extrémité, ladite deuxième extrémité dudit organe de basculement étant solidaire de la deuxième extrémité dudit deuxième bras.

D'autres caractéristiques et avantages de la présente invention apparaîtront mieux à la lecture de la description qui suit de plusieurs modes de réalisation de l'invention donnés à titre d'exemples non limitatifs. La description se réfère aux figures annexées sur lesquelles :
- la figure 1 est une vue en élévation de l'ensemble du dispositif de transfert ;
- la figure 2 est une vue partielle de droite du dispositif de transfert de la figure 1 ;
- la figure 3 est une vue de détails du montage d'un bras de basculement ;
- la figure 4 est une vue en coupe partielle de la partie A de la figure 1 ; et
- la figure 5 est une vue simplifiée illustrant le fonctionnement des moyens de basculement du dispositif de transfert.

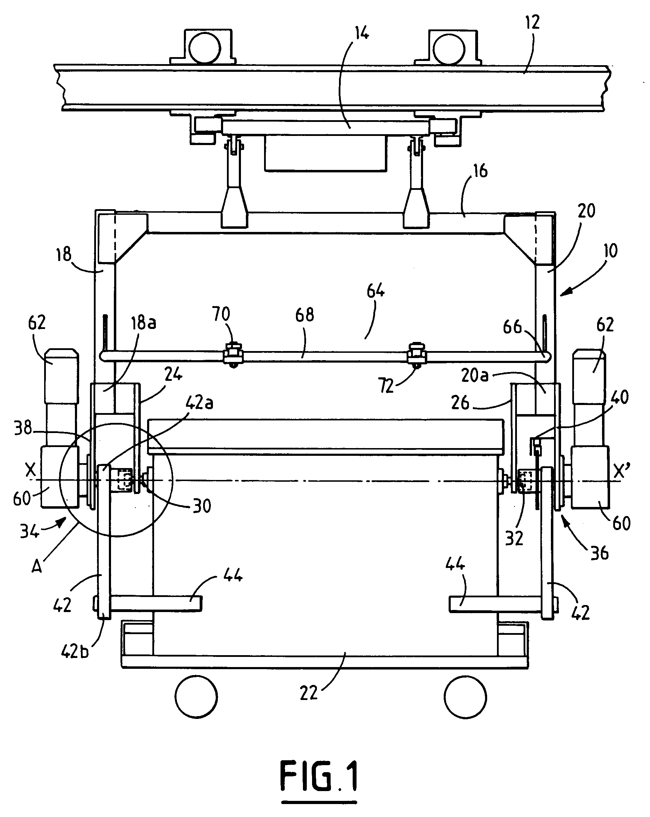

En se référant tout d'abord à la figure 1, on va décrire l'ensemble du dispositif de transfert. Celui-ci est constitué essentiellement par une balancelle 10 qui est suspendue à un rail horizontal de guidage 12 par l'intermédiaire d'un chariot d'entraînement 14. La balancelle 10 est constituée essentiellement par une poutre horizontale 16 et par deux montants verticaux, respectivement avant 18 et arrière 20, selon le sens de déplacement de la balancelle. Les montants 18 et 20 sont fixés à leur partie supérieure, respectivement à chaque extrémité de la poutre horizontale 16. Aux extrémités inférieures 18a et 20a sont fixées respectivement des moyens d'accrochage et de supportage du conteneur 22 et des moyens de commande de basculement du conteneur 22.

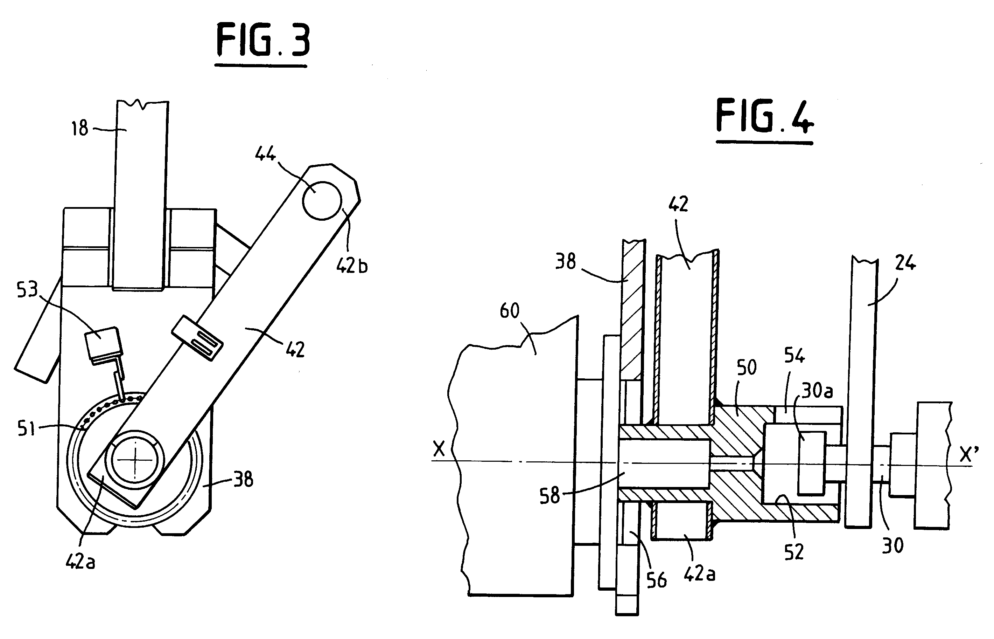

Les moyens d'accrochage sont constitués essentiellement par deux crochets 24 et 26 respectivement solidaires des extrémités inférieures 18a et 20a des montants verticaux. Comme le montre la figure 1, les crochets 24 et 26 sont décalés vers l'intérieur par rapport aux montants 18 et 20. Comme le montre mieux par exemple la figure 4, chaque crochet, par exemple le crochet 24, est engagé sur un tourillon 30 du conteneur 22, l'autre tourillon 32 étant engagé dans le deuxième crochet 26. Comme cela est bien connu, les tourillons 30 et 32 définissent un axe de pivotement du conteneur, référencé XX'. Comme on l'expliquera ultérieurement, l'axe de pivotement XX' constitue également l'axe de basculement du conteneur par rapport à la balancelle 10.

Les moyens de basculement sont constitués par deux ensembles de basculement, respectivement référencés 34 et 36, qui sont identiques dans ce premier mode de réalisation.

Chaque ensemble de basculement 34 ou 36 est monté pivotant autour de l'axe XX' par rapport à une plaque 38, 40 verticale prolongeant les montants respectivement 18 et 20. Chaque ensemble de pivotement est essentiellement constitué par un bras 42 dont une première extrémité 42a est montée pivotante autour de l'axe XX' et dont l'autre extrémité 42b est libre. Les bras 42 peuvent donc être animés d'un mouvement de rotation dans des plans orthogonaux à l'axe XX'. A l'extrémité libre 42b de chaque bras de basculement 42 est monté un élément de tige 44 qui est orthogonal au bras correspondant 42. Les éléments de tige 44 sont donc parallèles à l'axe de pivotement XX'. Comme le montre les figures 1 et 5, les éléments de tige 44 peuvent coopérer avec un des côtés, par exemple 46 du conteneur 42. On comprend dès à présent que, en commandant la rotation des bras 42, les éléments de tige 44 agissent sur le conteneur 42 pour provoquer son pivotement autour de l'axe XX' défini par les tourillons 30, 32 engagés dans les crochets 24 et 26.

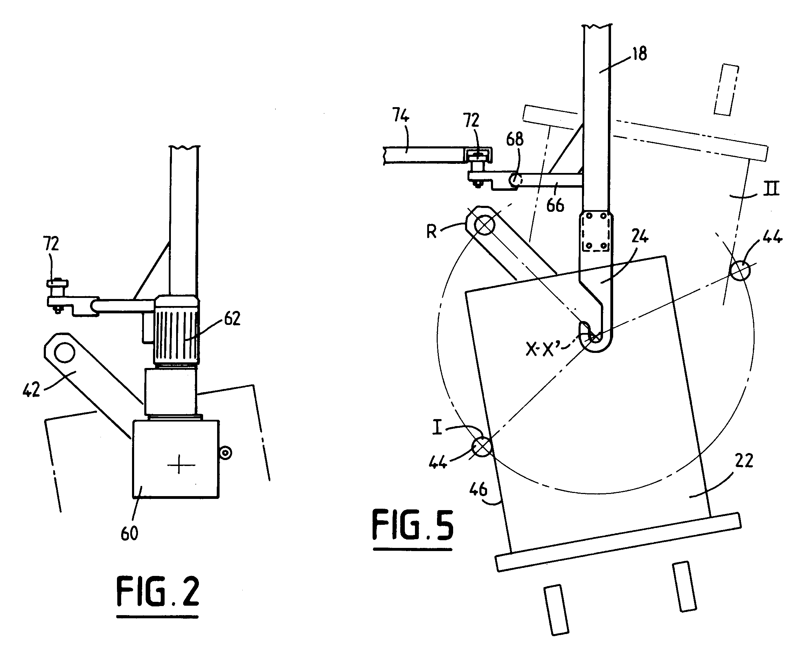

La figure 4 montre plus en détails le mode d'entraînement en rotation des bras de pivotement 42. Comme le montre la figure 4, le bras 42 est monté sur un moyeu 50 d'axe XX' dont l'extrémité est munie d'un logement sensiblement cylindrique 52 destiné à recevoir une des têtes de tourillon 30a. A sa partie supérieure, le logement 52 comporte bien sûr une ouverture 54 pour permettre le passage de la tête du tourillon lorsque le tourillon du conteneur est engagé dans le crochet correspondant. Sur le moyeu 50 est monté de façon solidaire l'extrémité 42a du bras 42. Le moyeu 50 est monté pivotant dans un orifice 56 ménagé dans la plaque 38 et définissant l'axe de pivotement XX'. Ce moyeu est solidaire de l'arbre 58 d'un moto-réducteur par exemple d'un moteur pas à pas 62, dont le carter est solidaire de la plaque 38. Plus précisément, comme le montre par exemple la figure 2, l'arbre 58 sort d'une boîte de réduction et de transmission d'angle 60 sur laquelle est monté le moteur 62 proprement dit. On comprend ainsi que la commande du moteur 62 permet de contrôler parfaitement le pivotement du bras 42 et donc le basculement du conteneur autour de l'axe XX'. Bien entendu, dans ce mode de réalisation, les deux bras de basculement 42 sont associés chacun à un moteur et les deux moteurs sont commandés en synchronisme pour provoquer des déplacements synchronisés des bras 42 de telle manière que les éléments de tige 44 restent sensiblement alignés. De préférence, le moyeu 50 est équipé d'un disque de codage 51 associété à un détecteur 53 solidaire de la plaque 38. Ce système permet de contrôler la position du bras 42.

La figure 1 montre également que la balancelle est équipée de moyens d'appui ou de stabilisation 64 qui permettent de compenser le couple appliqué à la balancelle du fait du basculement du conteneur lorsque celui-ci arrive dans sa position entièrement basculée, c'est-à-dire la position représentée en II sur la figure 5. Les moyens de maintien 64 sont essentiellement constitués par deux bras tels que 66 dont une extrémité est respectivement solidaire de chacun des montants verticaux 18 et 20 et dont l'autre extrémité est solidaire d'une barre horizontale 68. Sur cette barre horizontale 68 sont montés deux éléments de maintien 70 et 72 qui peuvent coopérer avec un élément fixe de l'installation 74. Comme le montre mieux la figure 5, la coopération entre les éléments d'appui 70 et 72 et la partie fixe 74 induisent un couple de rappel qui s'oppose au couple appliqué par le conteneur dans sa position basculée (position II de la figure 5) du fait de l'excentrement de celui-ci.

On comprend qu'on ne sortirait pas de l'invention, si les moyens de basculement étaient constitués par deux bras pivotants tels que les bras 42 aux extrémités libres desquels serait montée une tige continue remplaçant les éléments de tige 44. Dans ce cas, les deux bras de pivotement 42 sont mécaniquement couplés par la tige et il suffit alors de prévoir un seul moteur d'entraînement 60, 62 solidaire d'un des deux montants verticaux 18 ou 20.

Il faut ajouter qu'au repos les bras de basculement 42 occupent la position représentée en R sur la figure 5. On voit que ce n'est qu'après une rotation d'un angle a (de l'ordre de 90d) des bras que la tige 44 vient au contact du conteneur et initie donc le basculement de celui-ci (postion I). Le basculement complet du conteneur est réalisé lorsque les bras 42 passent de la position I à la position II.

Si l'on revient à la figure 4, on comprend que lorsque les bras 42 sont au repos le moyeu 50 occupe une position telle que l'ouverture 54 soit en position supérieure pour permettre l'introduction de la tête de tourillon 30a dans le logement 52 du moyeu. Lorsque le bras 42 passe de la position R à la position I de la figure 5, l'ouverture 54 n'est plus au-dessus de la tête de tourillon du fait de la rotation du moyeu. Le tourillon 30 est donc entièrement entouré par le crochet 24 et la paroi latérale du logement 52 du moyeu. Le tourillon 30 est donc emprisonné par la coopération du moyeu et du crochet. Cette situation est maintenue durant toute la phase de basculement du conteneur (position I à la position II) et bien sûr, durant toute la phase de redressement (position II à position I). De plus le bras 42 occupe la position R lorsque la balancelle 10 est en attente de chargement d'un conteneur. Lorsque le conteneur a été mis en place sur la balancelle, le ou les moteurs 60, 62 sont commandés pour amener les bras de basculement 42 dans la position I de la figure 5. Durant tous les déplacements de la balancelle, les tourillons du conteneur sont emprisonnés par la coopération des crochets 24 ou 26 et de la paroi du logement 52.

## Revendications

1. Dispositif de transfert de conteneurs pour des conteneurs comportant deux faces d'extrémité munies, chacune, d'un tourillon, lesdits tourillons définissant un axe de pivotement du conteneur, et deux faces latérales s'étendant parallèlement audit axe de pivotement, ledit dispositif comprenant :
une balancelle (10) comportant une traverse horizontale (16) apte à coopérer avec des rails (12) de guidage horizontaux et deux montants verticaux (18, 20) solidaires respectivement d'une des extrémités de ladite traverse,
deux ensembles d'accrochage (24, 26), chaque ensemble d'accrochage étant solidaire d'un desdits montants et apte à coopérer avec un des tourillons (30, 32) d'un conteneur (22) pour définir un axe horizontal de pivotement (XX') du conteneur par rapport à ladite balancelle, et
des moyens de basculement (34, 36) dudit conteneur comprenant un bras de basculement (42) dont une première extrémité (42a) est montée rotative par rapport à l'un desdits montants (18, 20) autour dudit axe de pivotement, ledit bras étant perpendiculaire audit axe, un organe de basculement (44) monté à la deuxième extrémité (42b) dudit bras et des moyens moteur (60, 62) montés sur ladite balancelle pour commander la rotation dudit bras autour dudit axe, ledit dispositif se caractérisant en ce que ledit organe de basculement (44) s'étend parallèlement audit axe de pivotement, ledit organe de basculement étant apte à entrer en contact avec une des faces dudit conteneur sous l'effet de la rotation dudit bras, par quoi le mouvement de rotation dudit organe de basculement provoque le basculement contrôlé du conteneur autour dudit axe de pivotement pour amener ledit conteneur dans une position basculée.

2. Dispositif de transfert selon la revendication 1, caractérisé en ce que lesdits moyens de basculement comprennent en outre :
un deuxième bras (42) de basculement dont une première extrémité est montée rotative par rapport audit deuxième montant autour dudit axe de pivotement, ledit deuxième bras étant perpendiculaire audit axe, un deuxième organe de basculement (44) parallèlement audit axe de pivotement, ledit deuxième organe de basculement étant apte à entrer en contact avec ledit conteneur, des deuxièmes moyens moteurs (60, 62) montés sur ladite balancelle pour commander la rotation dudit deuxième bras autour dudit axe, et des moyens de synchronisation des premiers et deuxièmes moyens moteurs pour que lesdits premier et deuxième organes de basculement soient sensiblement alignés dans leur mouvement de rotation.

3. Dispositif de transfert selon la revendication 1, caractérisé en ce que lesdits moyens de basculement comprennent en outre :
un deuxième bras de basculement (42) dont une première extrémité est montée rotative par rapport audit deuxième montant autour dudit axe de pivotement, ledit deuxième bras étant perpendiculaire audit axe, ledit organe de basculement comprenant une première extrémité qui est solidaire de la deuxième extrémité dudit premier bras de basculement et une deuxième extrémité, ladite deuxième extrémité dudit organe de basculement étant solidaire de la deuxième extrémité dudit deuxième bras.

4. Dispositif selon l'une quelconque des revendications 1 à 3, caractérisé en ce qu'il comprend en outre des moyens d'appui (70, 72) de ladite balancelle s'étendant d'un côté du plan vertical de ladite balancelle (10), lesdits moyens d'appui étant aptes à coopérer avec un organe fixe (74) par rapport à ladite balancelle, lesdits moyens d'appui étant aptes à coopérer avec un organe fixe par rapport à ladite balancelle pour créer un couple de rappel de ladite balancelle s'opposant au couple appliqué à ladite balancelle par ledit conteneur (22) en position basculée.

5. Dispositif selon l'une quelconque des revendications 1 à 4, caractérisé en ce que chaque ensemble d'accrochage comprend un crochet (24, 26) solidaire d'un des montants verticaux et en ce que ladite première extrémité d'un bras de basculement (42a) est solidaire en rotation d'un moyeu (50) dont l'extrémité est munie d'un logement (52) d'axe XX' apte à recevoir la tête (30a) d'un tourillon du conteneur, la paroi latérale dudit logement étant munie d'une ouverture (54) disposée pour permettre l'engagement dans ledit logement lorsque ledit bras est en position de repos (postion R) et pour que, lorsque ledit organe de basculement (44) arrive au contact du conteneur, ledit tourillon soit emprisonné entre ledit crochet (24, 26) et la paroi latérale dudit logement (52) du moyeu (50) .

## Claims

1. Device for transferring containers for containers which have two end faces each equipped with a trunnion, the said trunnions defining an axis of pivoting for the container, and two side faces running parallel to the said axis of pivoting, the said device comprising:
a swing tray (10) comprising a horizontal crossmember (16) capable of co-operating with horizontal guide rails (12) and two vertical uprights (18, 20) each secured to one of the ends of the said crossmember,
two catching units (24, 26), each catching unit being secured to one of the said uprights and capable of co-operating with one of the trunnions (30, 32) of a container (22) to define a horizontal axis of pivoting (XX') of the container with respect to the said swing tray, and
means (34, 36) of tipping the said container, these means comprising a tipping arm (42), a first end (42a) of which is mounted so that it can rotate with respect to one of the said uprights (18, 20) about the said axis of pivoting, the said arm being perpendicular to the said axis, a tipping member (44) mounted at the second end (42b) of the said arm, and drive means (60, 62) mounted on the said swing tray to bring about the rotating of the said arm about the said axis, the said device being characterized in that the said tipping member (44) runs parallel to the said axis of pivoting, the said tipping member being able to come into contact with one of the faces of the said container under the effect of the rotating of the said arm, via which the rotational movement of the said tipping member brings about controlled tipping of the container about the said axis of pivoting so as to bring the said container into a tipped position.

2. Transfer device according to Claim 1, characterized in that the said tipping means further comprise:
a second tipping arm (42), a first end of which is mounted so it can rotate with respect to the said second upright about the said axis of pivoting, the said second arm being perpendicular to the said axis, a second tipping member (44) parallel to the said axis of pivoting, the said second tipping member being able to come into contact with the said container, second drive means (60, 62) mounted on the said swing tray for bringing about the rotation of the said second arm about the said axis, and means of synchronizing the first and second drive means so that the said first and second tipping members are more or less aligned in their rotational movement.

3. Transfer device according to Claim 1, characterized in that the said tipping means further comprise:
a second tipping arm (42), a first end of which is mounted so that it can rotate with respect to the said second upright about the said axis of pivoting, the said second arm being perpendicular to the said axis, the said tipping member comprising a first end which is secured to the second end of the said first tipping arm and a second end, the said second end of the said tipping member being secured to the second end of the said second arm.

4. Device according to any one of Claims 1 to 3, characterized in that it further comprises rests (70, 72) for the said swing tray, extending on one side of the vertical plane of the said swing tray (10), the said rests being capable of co-operating with a member (74) that is stationary with respect to the said swing tray, in order to create a return moment on the said swing tray that opposes the moment applied to the said swing tray by the said container (22) in its tipped position.

5. Device according to any one of Claims 1 to 4, characterized in that each catching unit comprises a hook (24, 26) secured to one of the vertical uprights, and in that the said first end of a tipping arm (42a) rotates as one with a hub (50), the end of which has a housing (52) of axis XX' capable of accommodating the head (30a) of one trunnion of the container, the side wall of the said housing having an opening (54) arranged in such a way as to allow engagement in the said housing when the said arm is in the position of rest (position R) and so that when the said tipping member (44) comes in contact with the container, the said trunnion is trapped between the said hook (24, 26) and the side wall of the said housing (52) in the hub (50).

## Patentansprüche

1. Behälter-Transfer-Vorrichtung für Behälter mit zwei Stirnenden, von denen jedes mit einem Lagerzapfen versehen ist, wobei die Lagerzapfen eine Behälter-Drehachse definieren, und zwei seitlichen Flächen, die sich parallel zu dieser Drehachse erstrecken, wobei die Vorrichtung mit folgenden Merkmalen versehen ist:
- einer Schaukel (10) mit einer horizontalen Traverse (16), die mit horizontalen Führungsschienen (12) zusammenwirken kann, sowie zwei vertikalen Balken (18, 20), die mit jeweils einem der Enden der Traverse verbunden sind,
- zwei Einhängeeinrichtungen (24, 26), von denen jede mit einem der Balken verbunden ist und mit einem der Lagerzapfen (30, 32) eines Behälters (22) zusammenwirken kann, um eine horizontale Drehachse (XX') des Behälters im Zusammenhang mit der Schaukel zu bilden, und
- einer Kippeinrichtung (34, 36) für den Behälter, die einen Kipparm (42), von dem ein Ende (42a) drehbar um die Drehachse zu einem der Balken (18, 20) befestigt ist, wobei der Arm senkrecht zu der Achse angeordnet ist, ein Kipporgan (44), welches an dem zweiten Ende (42b) des Arms befestigt ist, und Antriebseinrichtungen (60, 62) aufweist, die auf der Schaukel angeordnet sind, um die Drehung des Armes um die Achse zu bewirken, wobei die Vorrichtung dadurch gekennzeichnet ist, daß das Kipporgan (44) sich parallel zu der Drehachse erstreckt, wobei das Kipporgan in der Lage ist, aufgrund des Dreheffektes des Arms mit einer der Flächen des Behälters in Kontakt zu gelangen, wodurch die Drehbewegung des Kipporgans eine kontrollierte Schwenkung des Behälters um die Drehachse erzeugt, um den Behälter in eine gekippte Stellung zu führen.

2. Transfer-Vorrichtung nach Anspruch 1, **dadurch gekennzeichnet**, daß die Kippeinrichtung unter anderem folgende Merkmale aufweist:
- einen zweiten Kipparm (42), von dem ein erstes Ende drehbar zu dem zweiten Balken um die Drehachse angeordnet ist, wobei der zweite Arm senkrecht zu dieser Achse verläuft, ein zweites Kipporgan (44), das parallel zu der Drehachse angeordnet ist und in Kontakt mit dem Behälter gebracht werden kann, eine zweite Antriebseinrichtung (60, 62), die an der Schaukel angeordnet ist, um die Drehung des zweiten Armes um die Achse zu bewirken, sowie eine Einrichtung zum Synchronisieren der ersten und zweiten Antriebseinrichtungen, damit die ersten und zweiten Kipporgane in ihrer Drehbewegung genau ausgerichtet sind.

3. Transfer-Vorrichtung nach Anspruch 1, **dadurch gekennzeichnet**, daß die Kippeinrichtung unter anderem folgende Merkmale aufweist:
- einen zweiten Kipparm (42), dessen erstes Ende um die Drehachse drehbar zu dem zweiten Balken angeordnet ist und der senkrecht zu der Achse angeordnet ist, wobei das Kipporgan ein erstes Ende, das mit dem zweiten Ende des ersten Kipparms verbunden ist, sowie ein zweites Ende aufweist, das mit dem zweiten Ende des zweiten Arms verbunden ist.

4. Vorrichtung nach einem der Ansprüche 1 bis 3, **dadurch gekennzeichnet**, daß sie unter anderem eine für die Schaukel vorgesehene Anschlageinrichtung (70, 72) aufweist, die sich auf einer Seite der vertikalen Ebene der Schaukel (10) erstreckt, wobei die Anschlageinrichtung mit einem relativ zu der Schaukel feststehenden Organ (74) zusammenwirken kann, um ein Rückstellmoment für die Schaukel zu schaffen, welches dem von dem Behälter 22 in seiner Kippstellung auf die Schaukel ausgeübten Moment entgegenwirkt.

5. Vorrichtung nach einem der Ansprüche 1 bis 4, **dadurch gekennzeichnet**, daß jede Einhängeeinrichtung einen Haken (24, 26) aufweist, der mit einem der vertikalen Balken verbunden ist, und daß das erste Ende eines Kipparms (42a) drehfest mit einer Nabe (50) verbunden ist, deren Ende mit einem in der Achse (XX') liegenden Aufnahmeteil (52) versehen ist, welches den Kopf (30a) eines Lagerzapfens des Behälters aufnehmen kann, wobei die Seitenwand des Aufnahmeteils mit einer Öffnung (54) versehen ist, die so angeordnet ist, daß ein Eingriff in das Aufnahmeteil möglich ist, wenn sich der Arm in Ruhestellung befindet (Stellung R), und daß, wenn das Kipporgan (44) mit dem Behälter in Berührung kommt, der Lagerzapfen zwischen dem Haken (24, 26) und der seitlichen Wand des Aufnahmeteils (52) der Nabe (50) eingeschlossen ist.
